Europäisches Patentamt

European Patent Office

Office européen des brevets

(11) Numéro de publication: **0 359 652**
**A2**

(12) ## DEMANDE DE BREVET EUROPEEN

(21) Numéro de dépôt: 89402482.7

(22) Date de dépôt: 12.09.89

(51) Int. Cl.⁵: **G 01 N 27/90**

(30) Priorité: 14.09.88 FR 8811965

(43) Date de publication de la demande:
21.03.90 Bulletin 90/12

(84) Etats contractants désignés:
BE CH DE ES GB IT LI

(71) Demandeur: **COMMISSARIAT A L'ENERGIE ATOMIQUE**
**31/33, rue de la Fédération**
**F-75015 Paris (FR)**

(72) Inventeur: **Broudeur, Robert**
**2, Les Sarments**
**F-04100 Manosque (FR)**

(74) Mandataire: **Mongrédien, André et al**
**c/o BREVATOME 25, rue de Ponthieu**
**F-75008 Paris (FR)**

(54) Capteur de détection angulaire de défauts dans un tube métallique par courants de Foucault.

(57) Capteur pour détection angulaire de défauts dans une gaine métallique.

Il comprend deux pièces de centrage (23, 23') de la gaine (11) disposées de part et d'autre d'une bague-support (25) de la bobine de mesure (28), le diamètre intérieur de la bague-support (25) et le diamètre des orifices des pièces de centrage (23, 23') étant dans le rapport (4/3±0,6/3) et leurs axes étant excentrés. Cette excentration associée au guidage qu'imposent les deux pièces de centrage à la gaine en rotation permet à la bobine de mesure de fonctionner comme une sonde ponctuelle.

Application à l'examen après service de gaines d'aiguilles utilisées dans les réacteurs nucléaires à neutrons rapides.

FIG. 3

Bundesdruckerei Berlin

## Description

## CAPTEUR DE DETECTION ANGULAIRE DE DEFAUTS DANS UN TUBE METALLIQUE PAR COURANTS DE FOUCAULT

L'invention est relative à un capteur de détection angulaire de défauts dans une gaine métallique par courants de Foucault, notamment dans les gaines des aiguilles irradiées dans les réacteurs nucléaires. Elle a pour finalité la détection angulaire des variations d'épaisseur, des fissurations, ainsi que des modifications structurales du matériau, notamment celles qui donnent naissance à des phases magnétiques localisées.

La demanderesse a déjà mis au point un premier dispositif qui permet de détecter sur des gaines d'aiguilles irradiées ce mêmes anomalies sans toutefois pouvoir préciser leur localisation angulaire ; seule la localisation axiale est possible. Le dispositif décrit dans l'article "EDDY CURRENT EXAMINATION OF IRRADIATED FUEL PINS" - 7ème conférence Internationale sur les examens non destructifs dans l'industrie nucléaire - GRENOBLE 29/01/85-01/02/85, comprend essentiellement un châssis métallique formé de deux platines horizontales et de trois colonnes verticales assurant la rigidité de l'ensemble et permettant le guidage d'une table perpendiculairement à la gaine et sur laquelle est fixé un capteur formé par une bague-support de la bobine de mesure, maintenue entre deux pièces en fer de conduction du champ magnétique de saturation et de centrage de la gaine métallique de l'aiguille. Les diamètres intérieurs de ces deux pièces et de la bague-support de la bobine de mesure sont identiques, coaxiaux et légèrement supérieurs au diamètre extérieur de la gaine métallique.

Cependant, pour certaines anomalies de gaine, il devient nécessaire de compléter la détection axiale des défauts par une détection angulaire afin de pouvoir en dresser une cartographie plus précise.

La présente invention concerne un capteur qui permet une telle détection angulaire grâce à une constitution différente de l'ensemble formé par la bague-support de la bobine de mesure et les deux pièces de centrage de la gaine métallique.

Le brevet américain n° 3110860 montre également comment effectuer des mesures locales de défauts, mais la pièce est immobile d'après cette conception et la bobine est déplacée autour de la pièce par des translations circulaires qui nécessitent un mécanisme compliqué.

A cet effet, le nouveau capteur, fixé sur une table déplaçable axialement et radialement par rapport à la gaine métallique comprend :
- des moyens pour créer un champ magnétique de saturation ;
- deux pièces ferromagnétiques de canalisation du champ magnétique et de centrage de la gaine, dont les diamètres des orifices de centrage sont très légèrement supérieurs au diamètre de la gaine ;
- une bague en matière isolante, maintenue fixe entre les deux pièces ferromagnétiques, et sur laquelle est enroulée une bobine de mesure reliée à une source de courant alternatif et à des moyens d'enregistrement du signal délivré par la bobine de mesure ;

capteur caractérisé en ce que le diamètre intérieur de la bague et le diamètre des orifices des deux pièces de centrage sont dans le rapport (4/3 ± 0,6/3) et en ce que l'axe des orifices de ces deux pièces de centrage est excentré par rapport à l'axe de la bobine. Des moyens de mise en rotation de la gaine sont également prévus.

Cette excentration associée au guidage qu'imposent les deux pièces de centrage à la gaine en rotation, permet à cette dernière d'être toujours en contact avec le même point de la circonférence intérieure de la bague. Dans ces conditions, la bobine de mesure fonctionne comme une sonde ponctuelle permettant une détection angulaire des défauts.

L'invention va maintenant être décrite plus en détail à l'aide des figures suivantes données à titre illustratif et non limitatif :

    - la figure 1 est une vue générale de l'invention,

    - les figures 2 et 3 sont des détails de la figure 1 montrant plus précisément les éléments de l'appareil avec lesquels on réalise les mesures, et

    - la figure 4 est un diagramme montrant les résultats obtenus.

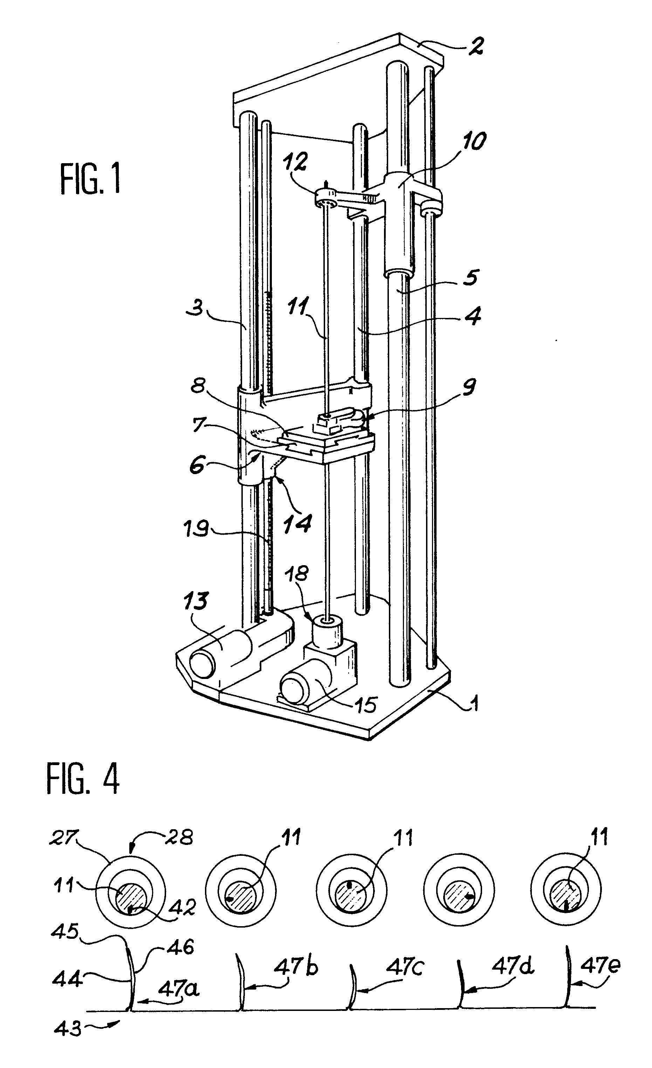

Comme on le voit sur la figure 1, le capteur 9 appartient à un banc de mesures qui comprend une platine inférieure 1 et une platine supérieure 2 horizontales et réunies par trois colonnes verticales 3, 4 et 5. Deux de ces colonnes 3 et 4 portent une table horizontale 6 qui y coulisse. La table 6 porte deux tablettes superposées 7 et 8 mobiles en translation par rapport à elle à l'aide de deux queues d'aronde perpendiculaires. La tablette supérieure 8 porte un capteur 9, qui est donc mobile en translation horizontale par le déplacement des tablettes 7 et 8 et en translation verticale par le déplacement de la table 6.

Deux colonnes 4 et 5 portent un système de support 10 d'une gaine 11. Le système de support 10 coulisse sur les colonnes 4 et 5 avec la possibilité d'y être bloqué. Il maintient en place le sommet de la gaine 11 en la laissant cependant libre en rotation autour de son axe, par exemple par un système de galets 12.

Un moteur pas à pas 13 disposé sur la platine inférieure 1 assure le déplacement de la table 6. Une des colonnes 3 est en effet parallèle à une vis sans fin 19 qui passe par un écrou à billes 14 attaché à la table 6.

La gaine 11 traverse le capteur 9 et aboutit par son extrémité inférieure à un mandrin 18, mis en rotation par un second moteur pas à pas 15, qui l'enserre.

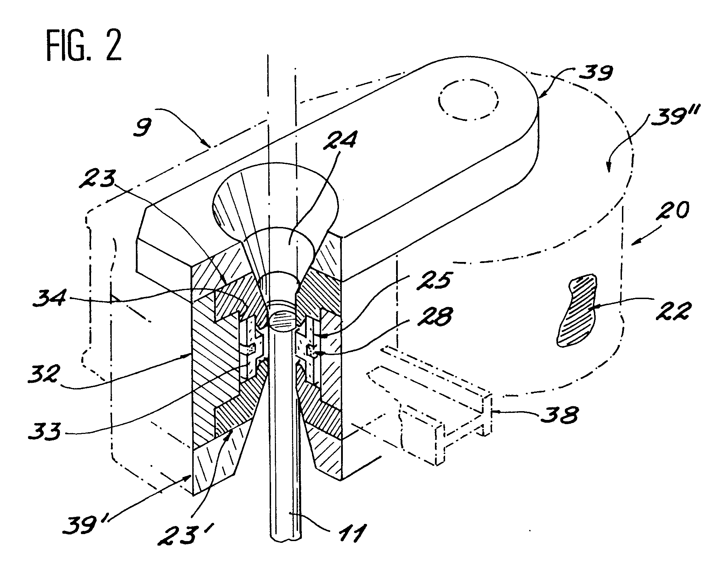

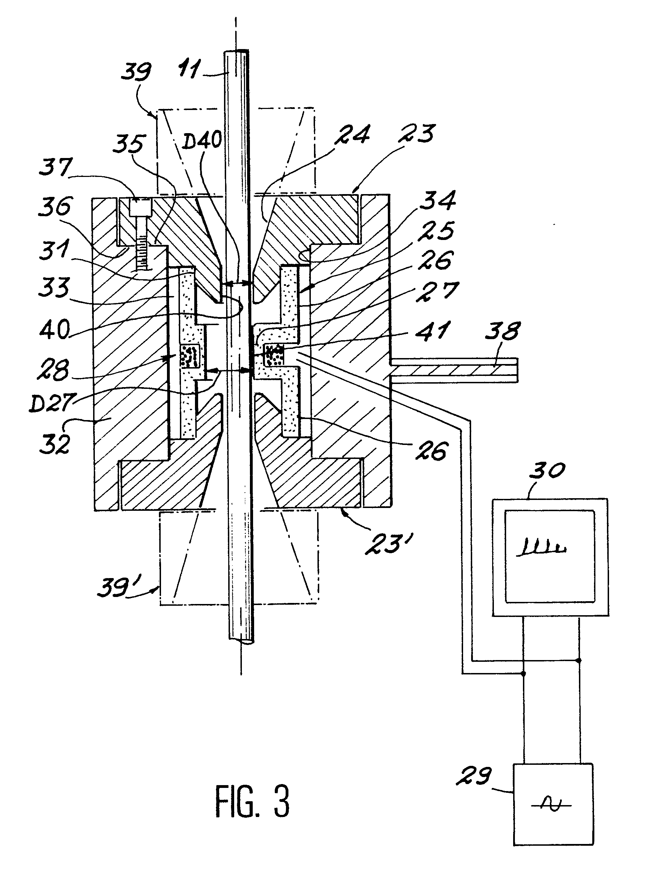

On se reporte maintenant aux figures 2 et 3. Le capteur 9 comprend tout d'abord une carcasse extérieure 20 en forme de U comprenant trois branches 39, 39', 39''. La branche centrale 39''

contient des enroulements de fil de cuivre 22 parcourus par un courant continu originaire d'une source non représentée et qui créent un champ magnétique de saturation dans des pièces 23 et 23' qui sont évidées verticalement en forme de tronc de cône et traversées par la gaine 11. Ces deux pièces 23 et 23', qui s'étendent entre les extrémités des deux autres branches 39, 39' de la carcasse en U, assurent également le centrage de la gaine 11. Les troncs de cône sont coaxiaux et leurs petits diamètres, qui ne sont que très légèrement supérieurs à celui de la gaine 11, sont orientés l'un vers l'autre. Les pièces de centrage 23 et 23', en fer doux, canalisent le champ magnétique produit par l'enroulement 22 dans l'espace situé entre elles. Cet espace est occupé par une bague 25 formée de deux rebords extrêmes coaxiaux 26 unis par une partie médiane 27 de forme cylindrique mais dont l'axe est excentré par rapport à l'axe des petits diamètres des pièces de centrage 23 et 23'. La bague 25 porte sur sa circonférence externe une bobine de mesure 28 reliée à une source de courant alternatif à fréquence variable 29 et à un oscilloscope 30.

La position de la bague 25 est assurée en introduisant les bords extrêmes 26 autour d'épaulements 31, centrés sur la gaine 11 par l'intermédiaire des empreintes tronconiques 24 des pièces de centrage 23 et 23'. La bobine 28 entoure donc une section de la gaine 11 mais est excentré par rapport à elle. Avantageusement, la bague 25 est en Téflon, la partie médiane 27 a une épaisseur constante et sa circonférence interne touche la gaine 11 sur une génératrice 41.

Le diamètre intérieur D27 de la bague 25 à sa partie médiane 27 et le diamètre intérieur D40 d'orifices cylindriques 40 qui prolongent dans les pièces de centrage 23 et 23' les extrémités amincies des empreintes tronconiques 24 - diamètre très légèrement supérieur à celui des gaines 11 pour permettre leur glissement - sont dans un rapport compris entre (4,6/3 et 3,4/3). La partie médiane 27 étant mince, le rapport entre le diamètre intérieur de la bobine 28 et le diamètre de la gaine 11 est peu différent.

Les pièces de centrage 23 et 23' et la bague 25 sont assujetties à l'aide d'un support 32 : il comprend en effet un évidemment cylindrique 33 dans lequel on introduit la bague 25 ainsi qu'une partie des pièces de centrage 23 et 23' comprenant en particulier une couronne de centrage 34 sur cet évidemment cylindrique 33, ainsi que deux portées planes en creux 35 sur chacune desquelles on place une face plane 36 des pièces de centrage 23 et 23'. On a opéré des perçages et des taraudages dans les faces planes 36 et dans les portées planes en creux 35 de manière à recevoir les vis de fixation 37 qui réunissent définitivement les différentes pièces entre elles.

Le support 32 et les pièces de centrage 23 et 23', qui affleurent à ses surfaces extrêmes, forment un bloc parallélépipédique que l'on peut extraire du capteur 9 par une translation latérale à l'aide d'une poignée 38 qui dépasse d'une découpe de la carcasse 20.

Le déroulement des mesures va être expliqué à l'aide de la figure 4. On représente face à face deux séries de positions relatives de la gaine 11 et de la bague 25 et de courbes correspondantes obtenues sur l'oscilloscope 30. Le second moteur 15 étant au repos, on déplace progressivement la table 6 le long de la gaine 11. Grâce aux pièces de centrage 23 et 23', les tablettes 7 et 8 et le capteur 9 sont déplacés en permanence pour suivre les déviations de la gaine 11 produites au cours du service. La gaine 11 reste en contact par une génératrice 41 avec la partie médiane 27 de la bague 25. L'arrivée de la bobine 28 à proximité d'un défaut 42 de la gaine 11, symbolisé ici par une indentation sur sa face externe, mais qui peut aussi bien se trouver sur la face interne, provoque une modification du signal délivré aux bornes de la bobine 28, ce qui traduit une variation d'impédance. Quand on s'approche du défaut 42, le point lumineux qui apparaissait sur l'oscilloscope 31, référencé 43 et qui témoignait d'une gaine intacte, se déplace le long d'un segment curviligne 44 pour arriver à un point extrême 45 quand la bobine 28 arrive juste à hauteur du défaut 42, après quoi la bobine 28 s'en éloigne et le point lumineux revient au point d'origine 43 suivant un segment curviligne 46 voisin du précédent. L'importance de cette variation d'impédance dépend à la fois de l'orientation du défaut 42 et de l'importance de ce défaut. Pour lever cette incertitude, après avoir accompli ce relevé le long d'une génératrice de la gaine 11, on fait tourner la gaine 11 à l'aide du second moteur 15 d'un angle de 30°, puis on refait un relevé. On procède ainsi jusqu'à ce qu'on ait accompli un tour complet avec la gaine 11. On dispose alors d'un certain nombre de signaux 47 (ici cinq, référencés 47a à 47e, ont été représentés), dont le plus important (47a et 47e) correspond à la position où le défaut 42 est le plus proche de la génératrice 41 touchée par la bague 25. Par contre, plus le défaut 42 est éloigné de cette génératrice 41, plus l'amplitude de la variation du signal est faible.

La comparaison des signaux 47a à 47e donne donc la localisation angulaire des défauts 42, ce qui améliore sensiblement la qualité des résultats obtenus. Avec le capteur déjà connu, où la bobine était concentrique à la gaine, on n'aurait pu obtenir que le signal 47b (ou 47d) pour n'importe quelle position de défaut 42. On n'aurait d'ailleurs pas du distinguer ce défaut localisé important d'un défaut plus léger, mais uniforme sur la circonférence.

**Revendications**

1. Capteur de détection angulaire de défauts dans une gaine métallique (11) fixé sur une table (6, 7, 8) déplaçable axialement et radialement par rapport à la gaine (11), et comprenant :
- des moyens (22) pour créer un champ magnétique de saturation ;
- deux pièces ferromagnétiques (23, 23') de canalisation du champ magnétique et de centrage de la gaine (11), dont les diamètres des orifices de centrage (40) sont très légèrement supérieurs au diamètre de la gaine ;

- une bague en matière isolante (25), maintenue fixe entre les deux pièces ferromagnétiques, et sur laquelle est enroulée une bobine (28) de mesure reliée à une source de courant alternatif (29) et à des moyens d'enregistrement (30) du signal délivré par la bobine de mesure ;

- des moyens (15, 18) de mise en rotation de la gaine (11) ;

capteur caractérisé en ce que le diamètre intérieur (D27) de la bague et le diamètre des orifices (D40) des deux pièces de centrage sont dans le rapport (4/3 ± 0,6/3) et en ce que l'axe des orifices de ces deux pièces de centrage est excentré par rapport à l'axe de la bobine.

2. Capteur selon la revendication 1, caractérisé en ce que la bague (25) prend appui sur des épaulements (31) des pièces de centrage (23, 23') par deux rebords extrêmes (26), les rebords (26) et les épaulements (31) étant centrés par rapport à la gaine (11), et en ce que la bobine (28) est disposée sur une circonférence externe, excentrée par rapport aux rebords extrêmes (26), d'une partie cylindrique médiane (27) entourant la gaine (11).

3. Capteur selon l'une quelconque des revendications 1 ou 2, caractérisé en ce que les moyens pour créer le champ magnétique de saturation sont constitués par les pièces de centrage (23, 23'), qui sont en matériau magnétique, et par un enroulement (22) parcouru par un courant continu qui crée un champ magnétique canalisé entre les pièces de centrage (23, 23').

4. Capteur selon les revendications 2 et 3, caractérisé en ce que la bague (25) et les pièces de centrage (23, 23') sont logées dans des évidements (35) d'un support (32) dépassant du capteur (9), le support (32), la bague (25) et les pièces de centrage (23, 23') pouvant être extraits en bloc du capteur (9).

FIG. 1

FIG. 4

FIG. 2

EP 0 359 652 A2

FIG. 3